# EUROPÄISCHE PATENTANMELDUNG

(11) **EP 3 056 794 A1**
(43) Veröffentlichungstag der Anmeldung: **17.08.2016**
(21) Anmeldenummer: 15155184.3
(22) Anmeldetag: 16.02.2015
(51) Int. Cl.: F17C 13/02

(54) **Vorrichtung zur Aufnahme eines Kryofluids**

(71) Anmelder: SALZBURGER ALUMINIUM AKTIENGESELLSCHAFT, 5651 Lend (AT)
(72) Erfinder: Lind, Christoph, 5671 Bruck (AT)
(74) Vertreter: Weiser, Andreas

(57) **Zusammenfassung**

Vorrichtung (1) zur Aufnahme eines Kryofluids, umfassend einen Druckbehälter (2) mit einem darin angeordneten Füllstandssensor (8), wobei der Druckbehälter (2) aus einem allgemein-zylindrischen Mantel (3) und zwei mit diesem druckdicht verschweißten Endkappen (5, 6) aufgebaut ist, der Füllstandssensor (8) im Wesentlichen stabförmig ist und normal zur Zylinderachse (4) des Mantels (3) liegt, und der Füllstandssensor (8) nur an einer Endkappe (5) montiert ist.

## Beschreibung

Die vorliegende Erfindung betrifft eine Vorrichtung zur Aufnahme eines Kryofluids, umfassend einen Druckbehälter mit einem darin angeordneten Füllstandssensor.

Um den Energiegehalt von Energieträgern, welche unter Normalbedingungen gasförmig sind, zu erhöhen, werden diese für Transport- und Lagerungszwecke entweder komprimiert und in Druckbehältern gespeichert oder auf Tieftemperatur abgekühlt und dabei zu einem Kryofluid zumindest teilverflüssigt und in temperaturisolierten Behältern gespeichert. Zum Antrieb von Fahrzeugen werden z.B. verflüssigtes Erdgas (liquefied natural gas, LNG) oder verflüssigter Wasserstoff als Kryofluide mit hoher Energiedichte gespeichert, um hinterher zum Betrieb von im wesentlichen herkömmlichen Verbrennungskraftmaschinen oder Brennstoffzellen der Fahrzeuge genutzt zu werden.

Ein Füllstandssensor wird dabei senkrecht im meist liegenden Druckbehälter eingebaut, um den Füllstand in diesen Druckbehältern zu messen. Zur möglichst genauen Messung des Füllstandes befindet sich der Füllstandsmesser mittig, d.h. in gleichem Abstand zwischen den zwei Enden des Druckbehälters, und stützt sich zwischen den Innenseiten der Behälterwandung ab. Der Füllstandssensor muss dazu an einem Mantelteil des Druckbehälters befestigt werden, bevor dieser druckdicht verschlossen wird, was den Fertigungsaufwand erhöht. Hierbei kommt erschwerend hinzu, dass die den Füllstand ausgebenden elektrischen Anschlussleitungen quer durch den Druckbehälter hindurchgeführt werden müssen, um den gemessenen Füllstand an einem Ende des Druckbehälters auszugeben, und dazu in der Regel durch eine der Endkappen des Druckbehälters hindurchgefädelt werden müssen, bevor diese mit dem Mantelteil des Druckbehälters verschweißt wird.

Die Erfindung setzt sich zum Ziel, die Nachteile des Standes der Technik zu überwinden und eine Vorrichtung zur Aufnahme eines Kryofluids zu schaffen, die einfach und kostengünstig zu fertigen ist.

Dieses Ziel wird gemäß der Erfindung mit einer von der einleitend genannten Art erreicht, die sich durch die Kombination der Merkmale auszeichnet,
dass der Druckbehälter in an sich bekannter Weise aus einem allgemein-zylindrischen Mantel und zwei mit diesem druckdicht verschweißten Endkappen aufgebaut ist,
dass der Füllstandssensor im Wesentlichen stabförmig ist und normal zur Zylinderachse des Mantels liegt, und
dass der Füllstandssensor nur an einer Endkappe montiert ist.

Die Erfindung schafft damit einen Druckbehälter mit Füllstandssensor, der besonders einfach im Druckbehälter montiert werden kann. So kann zuerst der Füllstandssensor an der Endkappe zusammen mit dieser als eine Baugruppe vormontiert und dabei gleich auch seine Anschlussleitungen durch die Endkappe hindurchgeführt werden, bevor der Mantel an die Endkappe angeschweißt wird und die Vorrichtung (danach oder zuvor) mit der zweiten Endkappe verschlossen wird. Der Füllstandssensor muss somit nicht mit Hilfsmitteln in der Mitte des Druckbehälters gesondert montiert werden, und auch das Hindurchfädeln der Anschlussleitungen beim Zusammensetzen von Endkappen und Mantel entfällt.

Um zu erreichen, dass der Einbauabstand zwischen Endkappe und Füllstandssensor möglichst gering ist, kann der Füllstandssensor dabei sogar unterschiedliche Abstände zu den Endkappen aufweisen.

Der Füllstandssensor kann ferner auch außermittig an der Endkappe angeordnet sein und/oder die Endkappe nicht vollständig überspannen, um Platz für Leitungen oder andere Einbauteile zu schaffen. Um jedoch einen größtmöglichen Bereich für Füllstandsmessungen zu erfassen, überspannt in einer bevorzugten Ausführungsform der Erfindung der Füllstandssensor die genannte Endkappe etwa mittig.

Der Füllstandssensor kann direkt an der Innenseite der genannten Endkappe oder einem zentralen Anschlusselement derselben montiert sein. Bevorzugt ist jedoch an der Endkappe, z.B. direkt an deren Innenseite oder Anschlusselement, eine in das vom Mantel umschlossene Volumen ragende Stützeinrichtung montiert, besonders bevorzugt geklemmt, geschweißt oder geschraubt, die den Füllstandssensor trägt. Durch die zusätzliche Stützeinrichtung ist es möglich, den Füllstandssensor weiter im Inneren des Druckbehälters zu platzieren. Da die Stützeinrichtung nur an der Endkappe montiert ist, ist es wiederum möglich, die Endkappe samt Füllstandssensor vollständig zusammenzubauen, bevor der Mantel an diese angeschweißt wird. Ferner hat die Stützeinrichtung den Vorteil, dass an ihr weitere Komponenten wie die Füll-, Entnahme- und/oder Ventleitungen oder ein Wärmetauscher, und/oder dessen Anschlussleitungen, abgestützt werden können.

Um den stabförmigen Füllstandssensor sicher in bzw. an der Stützeinrichtung zu verankern, kann die Stützeinrichtung auch einen Stutzen zur Aufnahme des Füllstandssensors aufweisen.

In einer Ausführungsform kann der Füllstandssensor den gemessenen Füllstand drahtlos an einen Empfänger außerhalb des Druckbehälters senden. Alternativ ist der Füllstandssensor dazu ausgebildet, Daten über eine Datenleitung auszugeben, welche bevorzugt die vorgenannte Endkappe durchsetzt. Dies ist kostengünstiger und in der erfinderischen Ausgestaltung besonders vorteilhaft, da sich der Füllstandssensor ohnehin in der Nähe der Endkappe befindet und die Datenleitung gleich bei der Vormontage des Füllstandssensors an der Endkappe durch diese hindurchgeführt werden kann und mit dieser eine Baugruppe für das Verschweißen mit dem Mantel bildet.

Wenn sich der Füllstandssensor nicht in der Mitte des Druckbehälters befindet, liefert er bei einer Neigung des Druckbehälters keine exakten Daten mehr. In einer bevorzugten Variante trägt die erfindungsgemäße Vorrichtung deshalb einen Neigungssensor, um die genannten Daten zu korrigieren. Der Neigungssensor kann sich an jeder beliebigen Stelle der Vorrichtung befinden, die in einer fixen Winkelbeziehung zum Füllstandssensor steht, z.B. im Füllstandssensor selbst oder am Druckbehälter. Insbesondere ist der Neigungssensor an der Endkappe montiert, da dann seine Anschlussleitungen gleich mit der Datenleitung des Füllstandssensors gebündelt werden können.

In einer bevorzugten Ausführungsform umfasst die Endkappe ein Anschlusselement, über welches die Datenleitung des Füllstandssensors nach außen geführt wird. Das Anschlusselement, z.B. ein Festlager bzw. Auflager zwischen dem Druckbehälter und einem isolierenden Außenbehälter, kann dabei als direkter Anschluss für die Datenleitung oder als Durchführungselement für diese ausgebildet sein. Dies hat den Vorteil, dass die Endkappe mit dem Füllstandssensor, der Datenleitung, dem optionalen Stützelement und dem Anschlusselement als Baugruppe vormontiert werden kann, ohne dass die Datenleitung gesondert durch die Wandung des Druckbehälters geführt werden muss.

In dieser Ausführungsform kann bevorzugt auch vorgesehen werden, dass eine Füllleitung, eine Entnahmeleitung und/oder eine Ventleitung für den Druckbehälter das Anschlusselement durchsetzen. Das Anschlusselement kombiniert somit die Anschlussmöglichkeiten für alle Leitungen der Vorrichtung zum Aufbau der genannten vormontierten Endkappen-Baugruppe für die Verschweißung mit dem Mantel.

In einer weiteren Variante der erfindungsgemäßen Vorrichtung ist der Druckbehälter in einen isolierenden Außenbehälter eingesetzt, wobei das Anschlusselement als starre Verbindung zwischen Druckbehälter und Außenbehälter dient. Der isolierende Außenbehälter kann entweder in einem Abstand vom Druckbehälter angeordnet sein, wobei im Zwischenraum zwischen Druckbehälter und Außenbehälter Vakuum oder ein Isoliermittel eingeschlossen ist, oder bereits mit einer isolierenden Innenschicht ausgestattet sein, die direkt am Druckbehälter anliegt. In dieser Variante erfüllt das Anschlusselement eine Doppelfunktion, da es sowohl einen Anschluss bzw. eine Durchführung für die Leitungen zwischen dem Innen- und dem Außenbereich des Druckbehälters darstellt als auch den Druckbehälter im Inneren des Außenbehälters fixiert. Bevorzugt liegt dabei an der dem Anschlusselement entgegengesetzten Seite des Druckbehälters ein Loslager zur Aufnahme von thermischen Spannungen zwischen Druckbehälter und Außenbehälter.

Die Erfindung wird nachfolgend anhand von in den beigeschlossenen Zeichnungen dargestellten Ausführungsbeispielen näher erläutert. In den Zeichnungen zeigen:
Fig. 1 ein Schaltbild der erfindungsgemäßen Vorrichtung und daran angeschlossener weiterer Komponenten;
Fig. 2 eine der Endkappen des Druckbehälters der Vorrichtung von Fig. 1 mit daran montierten Komponenten in einer teilweise aufgebrochenen Perspektivansicht; und
die Fig. 3a - 3d den schrittweisen Aufbau der Vorrichtung der Fig. 1 und 2 in aufeinanderfolgenden Schnittansichten.

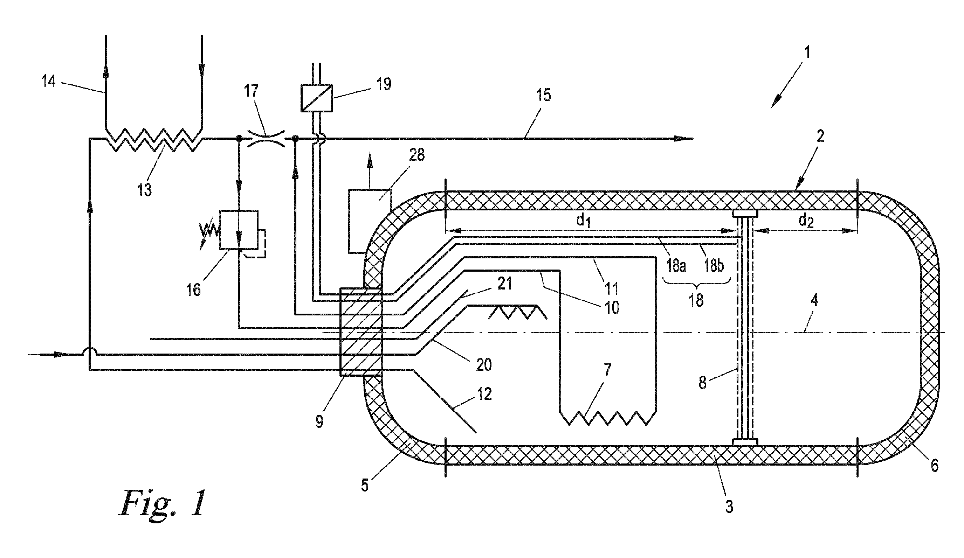

Fig. 1 zeigt eine Vorrichtung 1 mit einem Druckbehälter 2 zur Aufnahme eines Kryofluids. Der Druckbehälter 2 umfasst einen allgemein-zylindrischen Mantel 3 mit einer Zylinderachse 4 sowie zwei Endkappen 5, 6 und ist beispielsweise aus Metall, insbesondere Stahl oder Aluminium, gefertigt. Unter dem Begriff "allgemein-zylindrisch" wird ein Zylinder mit einer beliebigen Grund- bzw. Querschnittsflache verstanden, sei sie kreisrund, oval, rechteckig, quadratisch oder quadratisch mit abgerundeten Ecken oder sonstwie geformt.

Das Kryofluid kann beispielsweise Erdgas sein, das bei Temperaturen von bis zu -161°C und einem Druck von bis zu 16 bar zumindest teilweise verflüssigt vorliegt (liquefied natural gas, LNG), oder ein vergleichbares, in Verbrennungskraftmaschinen oder Brennstoffzellen einsetzbares Kryofluid, z.B. verflüssigter Wasserstoff. Die Vorrichtung 1 wird beispielsweise in der Art eines herkömmlichen Kraftstoffbehälters seitlich am Chassis bzw. Rahmen eines nicht weiter dargestellten Nutzfahrzeugs, z.B. eines Lastkraftwagens (LKWs) oder Personenkraftwagens (PKWs), montiert.

Das Kryofluid kann aber auch ein Kältemittel sein, beispielsweise Flüssigstickstoff, mit dem das Kühlsystem von Kühllastern betrieben wird, z.B. von Lebensmitteltransportern. Demgemäß kann die Vorrichtung 1 auch für die Speicherung solcher Kältemittel auf LKWs oder LKW-Anhängern verwendet werden.

Wird die Vorrichtung 1 als Kraftstofftank verwendet, kann es bei hohem Kraftstoffverbrauch, z.B. beim Bergauffahren, zu einer solch hohen Kraftstoffentnahmrate kommen, dass der Druck im Druckbehälter 2 rapide sinkt und für den Fahrzeugbetrieb nicht mehr ausreicht. Um in solchen Fällen die Temperatur und damit den Druck im Inneren des Druckbehälters 2 zu erhöhen, befindet sich ein Wärmetauscher 7 im Inneren des Druckbehälters 2. Weiters ist ein Füllstandssensor 8 im Inneren des Druckbehälters 2 angeordnet, um den Füllstand zu messen.

Die Endkappe 5 ist mit einem Anschlusselement 9 ausgestattet, z.B. einem Flansch oder einem Anschlussstutzen. An bzw. durch das Anschlusselement 9 sind Anschlussleitungen 10, 11 des Wärmetauschers 7 angeschlossen bzw. hindurchgeführt.

Das Anschlusselement 9 ist ferner von einer Entnahmeleitung 12 durchsetzt, über welche dem Druckbehälter 2 Kryofluid entnommen werden kann. Das entnommene Kryofluid kann z.B. durch einen weiteren Wärmetauscher 13, der sich außerhalb des Druckbehälters 2 befindet und von einem Abwärmekreis 14 eines Fahrzeugmotors (nicht dargestellt) beheizt wird, erwärmt und dann dem Fahrzeugmotor über eine Leitung 15 zugeführt werden.

Der Wärmetauscher 7 im Inneren des Druckbehälters 2 kann im vorgenannten Anwendungsfall direkt mit dem vom Wärmetauscher 13 erwärmten Kryofluid gespeist werden, indem ein Teil des Kryofluids aus der Leitung 15 ausgekoppelt und dem Wärmetauscher 7 über die Anschlussleitung 10 zugeführt wird. Die Regelung des Aufteilungsverhältnisses kann dabei mittels eines Druckregelventils 16 in der Anschlussleitung 10 und einer Drossel 17 in der Ausgangsleitung 15 durchgeführt werden. Es versteht sich jedoch, dass dem Wärmetauscher 7 auch andere Wärmetauschmedien zugeführt werden könnten.

Der Füllstandssensor 8 ist über das Anschlusselement 9 durchsetzende Leitungen 18a, 18b (zusammen: 18) mit einer Schnittstelle 19 für eine Auswerteeinrichtung verbunden, um beispielsweise eine kapazitive Messung des Füllstands im Inneren des Druckbehälters 2 zu ermöglichen.

Das Anschlusselement 9 ist weiters von einer Befüllleitung 20 zur Befüllung des Druckbehälters 2 mit Kryofluid und einer Vent-Leitung 21 zur Entgasung des Druckbehälters 2 bei Überdruck durchsetzt.

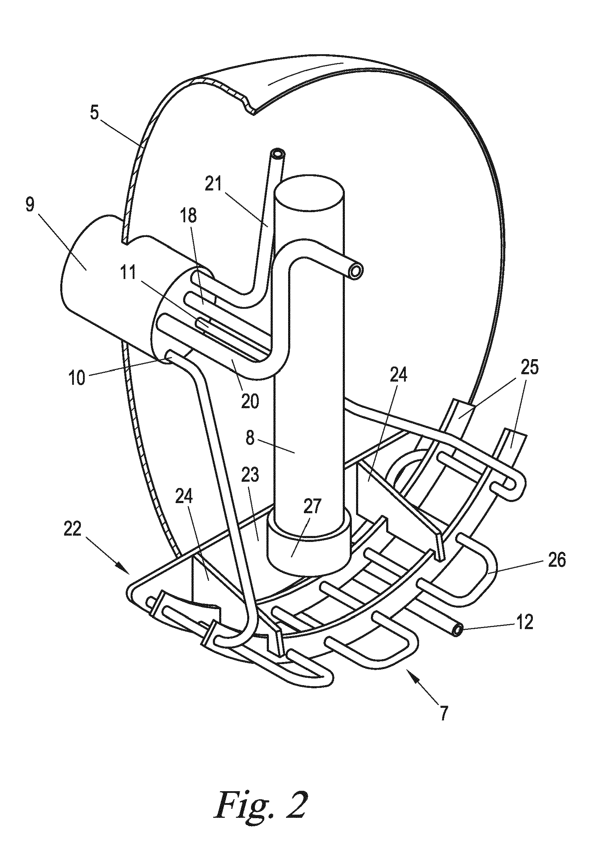

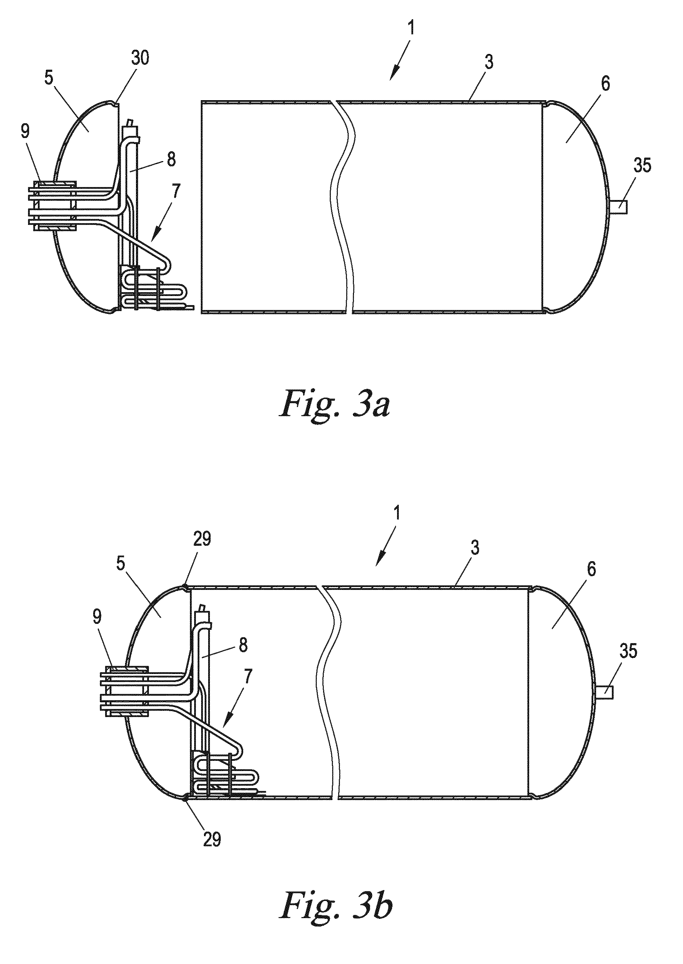

Fig. 2 zeigt die Anordnung des Wärmetauschers 7, des Füllstandssensors 8 und der zugehörigen Leitungen 10, 11, 12, 18, 20, 21 an der Endkappe 5 und deren Anschlusselement 9 im Detail. Der Wärmetauscher 7 ist nur an der Endkappe 5, z.B. an deren Anschlusselement 9 und/oder wie hier gezeigt direkt an deren Innenseite, fest montiert, z.B. angeschweißt oder angeschraubt, und ragt davon ausgehend in das vom Mantel 3 umschlossene Volumen des Druckbehälters 2 (Fig. 3a - 3d). Der Füllstandssensor 8 ist im Wesentlichen stabförmig, z.B. als zylindrischer Kondensator oder einfach durch zwei voneinander beabstandete längliche elektrische Kondensatorplatten oder -profile ausgebildet, liegt normal zur Zylinderachse 4 des Mantels 3 und ist ebenfalls nur an der Endkappe 5, z.B. deren Innenseite und/oder Anschlusselement 9, montiert, z.B. angeschweißt oder angeschraubt.

In der in Fig. 2 gezeigten Ausführungsform ist eine in das vom Mantel 3 umschlossene Volumen ragende Stützeinrichtung 22 an der Endkappe 5 montiert, z.B. angeschweißt oder angeschraubt, die den Wärmetauscher 7, den Füllstandssensor 8, die Entnahmeleitung 12, die Füllleitung 20 und/oder die Ventleitung 21 trägt, um diese zu stabilisieren. Die Stützeinrichtung 22 kann dabei an der Innenseite der Endkappe 5 und/oder deren Anschlusselement 9 befestigt oder sogar mit letzterem einstückig ausgebildet sein.

Die Stützeinrichtung 22 weist im gezeigten Beispiel einen Steg 23, der die Endkappe 5 in einem Randbereich überspannt, und vom Steg 23 auskragende Arme 24 auf, die den Wärmetauscher 7 tragen, z.B. mittels zweier oder mehrerer sichelförmiger Halteschienen 25. Die Halteschienen 25 sind in der in Fig. 2 gezeigten Ausführungsform wiederum in die Arme 24 gesteckt, könnten jedoch auch einstückig gefertigt oder zusammengeschweißt sein.

Der Wärmetauscher 7 kann jeglicher Art und Ausgestaltung sein, z.B. ein Rohrbündelwärmetauscher oder ein Spiralwärmetauscher. In der in Fig. 2 gezeigten Ausführungsform umfasst der Wärmetauscher 7 ein mäanderförmig durch einen unteren Bereich des Druckbehälters 2 geführtes Rohr 26.

Das Rohr 26 wird z.B. direkt von den sichelförmigen Halteschienen 25 gehalten und verläuft mäanderförmig in einer gekrümmten Ebene, welche der Innenseite des Mantels 3 folgt. Dadurch ist die Form des Wärmetauschers 7 der Mantelform, insbesondere einem Bodenabschnitt des Mantels 3, angepasst. Wenn somit nur wenig Kryofluid im Druckbehälter 2 vorhanden ist, kann auch dies effizient erwärmt werden bzw. kommt es bei einem vollen Druckbehälter 2 zu einer gleichmäßigen Erwärmung durch Konvektion.

Der Füllstandssensor 8 kann auf beliebige Arten an der Endkappe 5 montiert werden. In der gezeigten Ausführungsform ist der Füllstandssensor 8 mittels eines Stutzens 27, der beispielsweise am Steg 23 angeschweißt oder einstückig mit diesem ausgebildet ist, an der Endkappe 5 gelagert. Der Füllstandssensor 8 ist beispielsweise stab- oder zylinderförmig ausgebildet und kann so in den Stutzen 27 eingesteckt oder eingeschraubt werden. Alternativ könnte der Füllstandssensor 8 eine Montageeinrichtung umfassen, beispielsweise eine Halteklemme, die mit dem Steg 23, den Armen 24 und/oder dem Anschlusselement 9 verbunden, z.B. daran angesteckt, werden kann. Um einen möglichst großen Messbereich zu umfassen, überspannt der Füllstandssensor 8 die Endkappe 5 etwa mittig, d.h. er befindet sich im Wesentlichen vor dieser und ist etwa so lang wie der Durchmesser der Endkappe 5.

Durch die Montage des Füllstandssensors 8 nur an der Endkappe 5 befindet sich dieser im Allgemeinen nicht mehr in der Mitte der Längserstreckung des Druckbehälters 2, wie im Stand der Technik üblich, sondern weist unterschiedliche Abstände d₁, d₂ zu den Endkappen 5, 6 auf, siehe Fig. 1. Um Messungenauigkeiten beim Verkippen des Druckbehälters 2 auszugleichen, kann die Vorrichtung 1 daher optional auch einen Neigungssensor 28 (Fig. 1) umfassen, welcher beispielsweise vom Füllstandssensor 8, von der Stützeinrichtung 22 oder direkt von der Endkappe 5 getragen wird oder irgendwo am Druckbehälter 2 angeordnet ist und jedenfalls in starrer Winkelbeziehung mit dem Füllstandssensor 8 steht. Die Füllstandsmessdaten, die an der Schnittstelle 19 ausgegeben werden, können so korrigiert werden bzw. bereits korrigiert ausgegeben werden.

Die Fig. 3a - 3d zeigen den Zusammenbau der Vorrichtung 1. Gemäß Fig. 3a werden zuerst der Wärmetauscher 7 und der Füllstandssensor 8 mittels der Stützeinrichtung 22 an der Endkappe 5, z.B. deren Innenseite und/oder Anschlusselement 9, montiert, wobei die Leitungen 10, 11, 12, 18, 20, 21 durch das Anschlusselement 9 hindurchgeführt bzw. an dieses angeschlossen werden.

Danach wird die Endkappe 5 mit einer umlaufenden Schweißnaht 29 an den Mantel 3 angeschweißt (in Fig. 3b nur schematisch gezeigt), wobei die Endkappe 5 zu diesem Zweck mit einem Schweißsteg 30 ausgestattet sein kann. Vor oder nach dem Anschweißen der Endkappe 5 kann die dieser gegenüberliegende Endkappe 6 an den Mantel 3 angeschweißt werden, oder die Endkappe 6 und der Mantel 3 sind einstückig ausgebildet. Der Mantel 3, zusammen mit den zwei druckdicht angeschweißten Endkappen 5, 6, bildet nun den Druckbehälter 2.

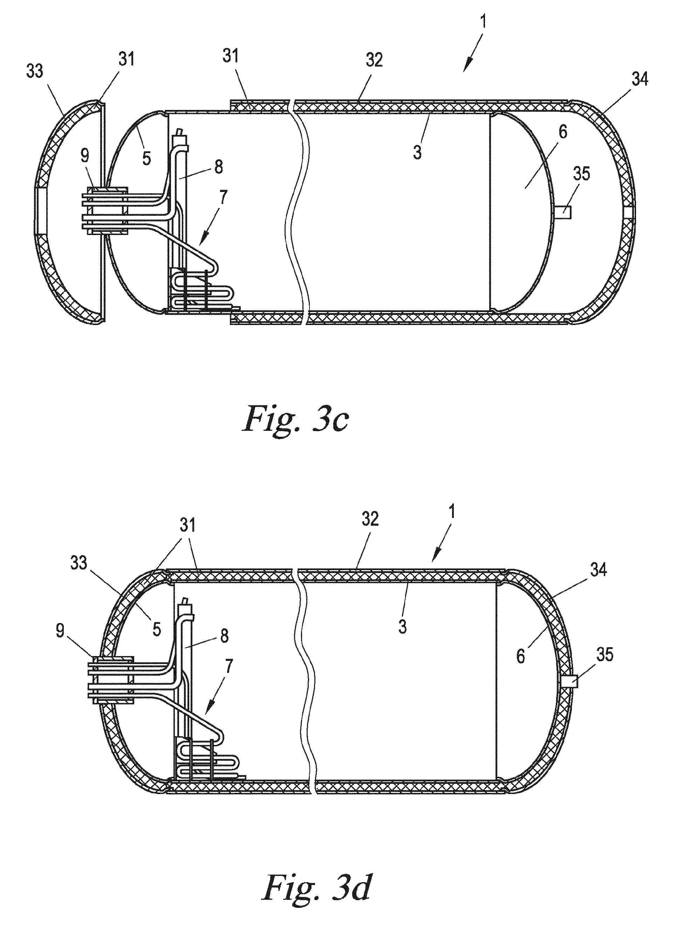

Die Fig. 3c und 3d zeigen das optionale Anbringen eines thermisch isolierenden Außenbehälters (Isolierbehälters) 31 am Druckbehälter 2. Der Außenbehälter 31 ist aus gleichem oder unterschiedlichem Material wie der Druckbehälter 2 gefertigt, beispielsweise aus Metall, insbesondere Stahl oder Aluminium, oder Kunststoff. Der Außenbehälter 33 kann mit einer isolierenden Innenschicht, z.B. einer Schaumstoffschicht, ausgestattet sein, die am Druckbehälter 2 anliegt. Alternativ kann der Außenbehälter 31 auch einen Abstand vom Druckbehälter 2 einhalten, wobei im Zwischenraum zwischen Außenbehälter 31 und Druckbehälter 2 Vakuum oder ein Isoliermittel eingeschlossen sein kann. Das Anschlusselement 9 dient hier auch als starre Verbindung (Festlager) zwischen Druckbehälter 2 und Außenbehälter 31, um diese beiden Elemente als starre Einheit zu verbinden.

Der Außenbehälter 31 kann ferner - ähnlich wie der Druckbehälter 2 - aus einem zentralen Außenmantel 32 und zwei endseitigen Stirnkappen 33, 34 zusammengesetzt sein. Die Montage des Außenbehälters 31 am Druckbehälter 2 kann dabei beliebig erfolgen, beispielsweise wird erst die Endkappe 32 am Anschlusselement 9 angebracht (z.B. verschweißt oder verschraubt), und danach der Außenmantel 32 mit eventuell zuvor angeschweißter Endkappe 34 an die Endkappe 33 angeschweißt. Alternativ kann die Endkappe 33 auch erst nach dem Verschweißen am Anschlusselement 9 fixiert werden.

Da der Druckbehälter 2 und der Außenbehälter 31 unterschiedlichen thermischen Ausdehnungen unterliegen, kann zwischen der dem Anschlusselement 9 gegenüberliegenden Endkappe 6 des Druckbehälters 2 und der Stirnkappe 34 des Außenbehälters 31 ein - hier nur schematisch dargestelltes - Axial- bzw. Loslager 35 zur Aufnahme von in Richtung der Achse 4 auftretenden thermischen Spannungen zwischen Druckbehälter 2 und Außenbehälter 31 angeordnet sein.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Vorrichtung zur Aufnahme eines Kryofluids, umfassend einen Druckbehälter (2) mit einem darin angeordneten Füllstandssensor (8),
**gekennzeichnet durch** die Kombination der Merkmale
dass der Druckbehälter (2) in an sich bekannter Weise aus einem allgemein-zylindrischen Mantel (3) und zwei mit diesem druckdicht verschweißten Endkappen (5, 6) aufgebaut ist,
dass der Füllstandssensor (8) im Wesentlichen stabförmig ist und normal zur Zylinderachse (4) des Mantels (3) liegt, und
dass der Füllstandssensor (8) nur an einer Endkappe (5) montiert ist.

2. Vorrichtung nach Anspruch 1, **dadurch gekennzeichnet, dass** der Füllstandssensor (8) unterschiedliche Abstände (d₁, d₂) zu den Endkappen (5, 6) aufweist.

3. Vorrichtung nach Anspruch 1 oder 2, **dadurch gekennzeichnet, dass** der Füllstandssensor (8) die genannte Endkappe (5) etwa mittig überspannt.

4. Vorrichtung nach einem der Ansprüche 1 bis 3, **dadurch gekennzeichnet, dass** an der Endkappe (5) eine in das vom Mantel (3) umschlossene Volumen ragende Stützeinrichtung (22) montiert ist, bevorzugt geklemmt, geschweißt oder geschraubt, die den Füllstandssensor (8) trägt.

5. Vorrichtung nach Anspruch 4, **dadurch gekennzeichnet, dass** der Füllstandssensor (8) im Wesentlichen zylinderförmig ausgebildet ist und die Stützeinrichtung (22) einen Stutzen (27) zur Aufnahme des Füllstandssensors (8) umfasst.

6. Vorrichtung nach einem der Ansprüche 1 bis 5, **dadurch gekennzeichnet, dass** der Füllstandssensor (8) dazu ausgebildet ist, Daten über eine Datenleitung (18) auszugeben, welche die vorgenannte Endkappe (5) durchsetzt.

7. Vorrichtung nach Anspruch 6, ferner umfassend einen von der Vorrichtung (1) getragenen Neigungssensor (28), um die genannten Daten zu korrigieren.

8. Vorrichtung nach Anspruch 6 oder 7, **dadurch gekennzeichnet, dass** die genannte Endkappe (5) ein Anschlusselement (9) umfasst, über welches die Datenleitung (18) nach außen geführt wird.

9. Vorrichtung nach Anspruch 8, **dadurch gekennzeichnet, dass** die Vorrichtung (1) eine Füllleitung (20), eine Entnahmeleitung (12) und/oder eine Ventleitung (21) für den Druckbehälter (2) umfasst, die das Anschlusselement (9) durchsetzt bzw. durchsetzen.

10. Vorrichtung nach einem der Ansprüche 1 bis 9 in Verbindung mit Anspruch 4, **dadurch gekennzeichnet, dass** ein Wärmetauscher (7) an der Endkappe (5) montiert und durch die Stützeinrichtung (22) gestützt ist.

11. Vorrichtung nach einem der Ansprüche 1 bis 10, **dadurch gekennzeichnet, dass** der Druckbehälter (2) in einen isolierenden Außenbehälter (31) eingesetzt ist, wobei das Anschlusselement (9) als starre Verbindung zwischen Druckbehälter (2) und Außenbehälter (31) dient.

12. Vorrichtung nach Anspruch 11, **dadurch gekennzeichnet, dass** an der dem Anschlusselement (9) entgegengesetzten Seite des Druckbehälters (2) ein Loslager (35) zur Aufnahme von thermischen Spannungen zwischen Druckbehälter (2) und Außenbehälter (31) liegt.
